# EUROPEAN PATENT APPLICATION

(11) **EP 4 125 273 A1**
(43) Date of publication of application: **01.02.2023**
(21) Application number: 22185565.3
(22) Date of filing: 18.07.2022
(51) Int. Cl.: H04N 21/2187, G06F 3/048, G06Q 30/02, H04N 21/2743, H04N 21/431, H04N 21/475, H04N 21/4788, H04N 21/81, H04N 21/8545

(54) **DISPLAY CONTROL METHOD AND APPARATUS FOR VIRTUAL ITEM, AND DISPLAY METHOD AND APPARATUS FOR VIRTUAL ITEM**

(30) Priority: 28.07.2021 CN 202110857960
(71) Applicant: Beijing Dajia Internet Information Technology Co., Ltd., Beijing 100085 (CN)
(72) Inventor: WANG, Mingxin, Beijing 100085 (CN)
(74) Representative: Attfield, Andrew John

(57) **Abstract**

The disclosure relates to a display control method and apparatus for a virtual item, and a display method and apparatus for a virtual item. The display control method for a virtual item includes: displaying (S210) a virtual item configuration panel, wherein a plurality of item slots are displayed in the virtual item configuration panel; acquiring (S220) a live streaming attribute, wherein the live streaming attribute is acquired in response to an attribute selection operation; acquiring (S230) a virtual item corresponding to the item slot, wherein the virtual item is acquired in response to a virtual item configuration operation on the item slot; and establishing (S240) a mapping relationship between the live streaming attribute, the item slot and the virtual item, wherein the mapping relationship is used to instruct an audience terminal to display the virtual item in the item slot of a virtual item panel.

## Description

### TECHNICAL FIELD

The disclosure relates to the field of Internet technologies, and in particular, to a display control method and apparatus for a virtual item, a display method and apparatus for a virtual item, an electronic device, a computer-readable storage medium, and a computer program product.

### BACKGROUND

Virtual items, such as gifts, props, etc., can facilitate interaction between the anchor and the audience. At present, a virtual item panel corresponding to the type of live streaming room can be preconfigured, so that the audience terminal displays the virtual item panel corresponding to the type of the live streaming room.

### SUMMARY

The disclosure provides a display control method and apparatus for a virtual item, a display method and apparatus for a virtual item, an electronic device, a computer-readable storage medium, and a computer program product. The technical solutions of the disclosure are as follows.

According to an aspect of the disclosure, there is provided a display control method for a virtual item, including: displaying a virtual item configuration panel, wherein a plurality of item slots are displayed in the virtual item configuration panel; acquiring a live streaming attribute, wherein the live streaming attribute is acquired in response to an attribute selection operation; acquiring, in response to a virtual item configuration operation on an item slot, a virtual item corresponding to the item slot; and establishing a mapping relationship between the live streaming attribute, the item slot and the virtual item, wherein the mapping relationship is used to instruct an audience terminal to display the virtual item in the item slot of a virtual item panel.

Optionally, the method further includes: displaying a live streaming attribute configuration page; receiving a target live streaming attribute parameter through the live streaming attribute configuration page, wherein the target live streaming attribute parameter is used to define a content and an attribute of a live streaming room and/or an anchor account; generating the live streaming attribute based on the target live streaming attribute parameter.

Optionally, the method further includes: acquiring an amount of types of the virtual item that has been configured in the item slots under a plurality of live streaming attributes, from the established mapping relationship between the live streaming attribute, the item slot and the virtual item, when there are a plurality of the live streaming attributes; generating identification information based on the amount of types of the virtual item; displaying the identification information in the item slot.

Optionally, the method further includes: acquiring and displaying the configured virtual item and the live streaming attribute corresponding to the virtual item, wherein the configured virtual item is acquired in response to a triggering operation on the identification information.

Optionally, said acquiring the virtual item corresponding to the item slot includes: acquiring candidate virtual items, wherein the candidate virtual items are acquired in response to the virtual item configuration operation on the item slot; acquiring the virtual item corresponding to the item slot from the candidate virtual items, wherein the virtual item is acquired in response to a selection operation on the candidate virtual items.

Optionally, the method further includes: determining a target live streaming attribute of a live streaming room displayed by the audience terminal, in response to a virtual item acquisition request sent by the audience terminal; determining a target item slot under the target live streaming attribute and a target virtual item corresponding to the target item slot, based on the mapping relationship between the live streaming attribute, the item slot and the virtual item; sending the target virtual item corresponding to the target item slot to the audience terminal, such that the audience terminal displays the target virtual item in the target item slot of the virtual item configuration panel.

Optionally, when there are a plurality of the target live streaming attributes, said determining the target item slot under the target live streaming attribute and the target virtual item corresponding to the target item slot based on the mapping relationship between the live streaming attribute, the item slot and the virtual item includes: searching and finding the item slot under each of the target live streaming attributes and the virtual item corresponding to the item slot from the mapping relationship; determining the target item slot and the target virtual item corresponding to the target item slot based on the item slot under each of the target live streaming attributes and the virtual item corresponding to the item slot.

Optionally, said determining the target item slot and the target virtual item corresponding to the target item slot based on the item slot under each of the target live streaming attributes and the virtual item corresponding to the item slot includes: acquiring an attribute priority of each of the target live streaming attributes; obtaining the target item slot and the target virtual item from item slots of the plurality of target live streaming attributes and virtual items corresponding to the item slots, based on the attribute priority.

Optionally, the method further includes: displaying a generated history panel configuration record in response to a history record viewing operation, wherein the history panel configuration record includes the established mapping relationship between the live streaming attribute, the item slot and the virtual item.

According to an aspect of the disclosure, there is provided a display method for a virtual item, including: determining a target live streaming attribute of a currently displayed live streaming room in response to a virtual item acquisition request; acquiring a target item slot corresponding to the target live streaming attribute and a target virtual item corresponding to the target item slot, wherein the target item slot and the target virtual item corresponding to the target item slot are determined based on a preconfigured mapping relationship between a live streaming attribute, an item slot and a virtual item, the mapping relationship is obtained through configuration of a virtual item configuration panel displayed by a server; and displaying the target virtual item in the target item slot of a virtual item panel.

Optionally, when there are a plurality of target live streaming attributes, said acquiring the target item slot corresponding to the target live streaming attribute and the target virtual item corresponding to the target item slot includes: acquiring an item slot under each of the target live streaming attributes and the virtual item corresponding to the item slot based on the mapping relationship; determining the target item slot and the target virtual item corresponding to the target item slot based on the item slot under each of the target live streaming attributes and the virtual item corresponding to the item slot.

Optionally, said determining the target item slot and the target virtual item corresponding to the target item slot based on the item slot under each of the target live streaming attributes and the virtual item corresponding to the item slot includes: acquiring an attribute priority of each of the target live streaming attributes, and determining the target item slot and the target virtual item corresponding to the target item slot based on the attribute priority.

According to an aspect of the disclosure, there is provided a display control apparatus for a virtual item, including: a panel display module configured to display a virtual item configuration panel, wherein a plurality of item slots are displayed in the virtual item configuration panel; an attribute acquisition module configured to acquire a live streaming attribute, wherein the live streaming attribute is acquired in response to an attribute selection operation; an item acquisition module configured to acquire a virtual item corresponding to the item slot, wherein the virtual item is acquired in response to a virtual item configuration operation on the item slot; and a relationship generation module configured to establish a mapping relationship between the live streaming attribute, the item slot and the virtual item, wherein the mapping relationship is used to instruct an audience terminal to display the virtual item in the item slot of a virtual item panel.

Optionally, the apparatus further includes: a configuration page display module configured to display a live streaming attribute configuration page; a receiving module configured to receive a target live streaming attribute parameter through the live streaming attribute configuration page, wherein the live streaming attribute parameter is used to define a content and an attribute of a live streaming room and/or an anchor account; an attribute generation module configured to generate the live streaming attribute based on the target live streaming attribute parameter.

Optionally, the apparatus further includes: a quantity acquisition module configured to acquire an amount of types of the virtual item that has been configured in the item slots under a plurality of live streaming attributes, from the established mapping relationship between the live streaming attribute, the item slot and the virtual item, when there are a plurality of the live streaming attributes; an identification generation module configured to generate identification information based on the amount of types of the virtual item; an identification display module configured to display the identification information in the item slot.

Optionally, the apparatus further includes: an item and attribute display module configured to acquire and display the configured virtual item and the live streaming attribute corresponding to the virtual item, wherein the configured virtual item is acquired in response to a triggering operation on the identification information.

Optionally, the item acquisition module includes: a candidate item acquisition unit configured to acquire candidate virtual items, wherein the candidate virtual items are acquired in response to the virtual item configuration operation on the item slot; an item acquisition unit configured to acquire the virtual item corresponding to the item slot from the candidate virtual items, wherein the virtual item is acquired in response to a selection operation on the candidate virtual items.

Optionally, the apparatus further includes: an attribute determination module configured to determine a target live streaming attribute of a live streaming room displayed by the audience terminal, in response to a virtual item acquisition request sent by the audience terminal; a slot and item determination module configured to determine a target item slot under the target live streaming attribute and a target virtual item corresponding to the target item slot, based on the mapping relationship between the live streaming attribute, the item slot and the virtual item; a sending module configured to send the target virtual item corresponding to the target item slot to the audience terminal, such that the audience terminal displays the target virtual item in the target item slot of the virtual item panel.

Optionally, when there are a plurality of the target live streaming attributes, the slot and item determination module includes: a searching unit configured to search and find the item slot under each of the target live streaming attributes and the virtual item corresponding to the item slot from the mapping relationship; a slot and item determination unit configured to determine the target item slot and the target virtual item corresponding to the target item slot based on the item slot under each of the target live streaming attributes and the virtual item corresponding to the item slot.

Optionally, the slot and item determination unit is configured to acquire an attribute priority of each of the target live streaming attributes; and obtain the target item slot and the target virtual item from item slots of the plurality of target live streaming attributes and virtual items corresponding to the item slots, based on the attribute priority.

Optionally, the apparatus further includes: a record display module configured to display a generated history panel configuration record in response to a history record viewing operation, wherein the history panel configuration record includes the established mapping relationship between the live streaming attribute, the item slot and the virtual item.

According to an aspect of the disclosure, there is provided a display apparatus for a virtual item, including: a response module configured to determine a target live streaming attribute of a currently displayed live streaming room; a first acquisition module configured to acquire a target item slot corresponding to the target live streaming attribute and a target virtual item corresponding to the target item slot, wherein the target item slot and the target virtual item corresponding to the target item slot are determined based on a preconfigured mapping relationship between a live streaming attribute, an item slot and a virtual item, the mapping relationship is obtained through configuration of a virtual item configuration panel displayed by a server; and a display module configured to display the target virtual item in the target item slot of a virtual item panel.

Optionally, when there are a plurality of target live streaming attributes, the acquisition module includes: an acquisition unit configured to acquire an item slot under each of the target live streaming attributes and the virtual item corresponding to the item slot based on the mapping relationship; a slot and item determination unit configured to determine the target item slot and the target virtual item corresponding to the target item slot based on the item slot under each of the target live streaming attributes and the virtual item corresponding to the item slot.

Optionally, the slot and item determination unit is configured to acquire an attribute priority of each of the target live streaming attributes, and determine the target item slot and the target virtual item corresponding to the target item slot based on the attribute priority.

According to an aspect of the disclosure, there is provided an electronic device, including: a processor; and a memory for storing instructions executable by the processor, wherein the processor is configured to execute the instructions to implement the display control method for a virtual item according to any one of the first aspect.

According to an aspect of the disclosure, there is provided an electronic device, including: a processor; and a memory for storing instructions executable by the processor, wherein the processor is configured to execute the instructions to implement the display method for a virtual item according to any one of the second aspect.

According to an aspect of the disclosure, there is provided a computer-readable storage medium, wherein instructions in the computer-readable storage medium enables an electronic device to execute the display control method for a virtual item according to any one of the first aspect when executed by a processor of the electronic device.

According to an aspect of the disclosure, there is provided a computer-readable storage medium, wherein instructions in the computer-readable storage medium enables an electronic device to execute the display method for a virtual item according to any one of the second aspect when executed by a processor of the electronic device.

According to an aspect of the disclosure, there is provided a computer program product, including a computer program, wherein the computer program implements the display control method for a virtual item according to any one of the first aspect when executed by a processor.

According to an aspect of the disclosure, there is provided a computer program product, including a computer program, wherein the computer program implements the display method for a virtual item according to any one of the second aspect when executed by a processor.

It should be noted that the above general description and the following detailed description are merely exemplary and explanatory and should not be construed as limiting of the disclosure.

### BRIEF DESCRIPTION OF THE DRAWINGS

The drawings herein are incorporated into the specification and constitute a part of the specification, show examples conforming to the disclosure, and are used to explain the principle of the disclosure together with the specification, and do not constitute an improper limitation on the disclosure.
FIG. 1 is an application environment diagram of a display control method for a virtual item according to an example.
FIG. 2 is a flow chart of a display control method for a virtual item according to an example.
FIG. 3 is a schematic diagram of a virtual item configuration panel in configuration according to an example.
FIG. 4 is a schematic diagram of a configured virtual item configuration panel according to an example.
FIG. 5 is a flowchart showing steps of generating a live streaming attribute according to an example.
FIG. 6a is a schematic diagram showing a generation page of a live streaming attribute according to an example.
FIG. 6b is a schematic diagram showing a generation page of a live streaming attribute according to another example.
FIG. 7 is a schematic diagram of an attribute conflicting item page according to an example.
FIG. 8 is a schematic diagram of an item selection page according to an example.
FIG. 9 is a flow chart of processing a virtual item acquisition request of an audience terminal according to an example.
FIG. 10 is a schematic diagram of a virtual item panel displayed by the audience terminal according to an example.
FIG. 11 is a schematic diagram showing steps of determining a target item slot and a target virtual item according to an example.
FIG. 12 is a flowchart showing a display method for a virtual item according to an example.
FIG. 13 is a flow chart of a display control method for a virtual item according to another example.
FIG. 14 is a block diagram of a display control apparatus for a virtual item according to an example.
FIG. 15 is a block diagram of a display apparatus for a virtual item according to an example.
FIG. 16 is a block diagram of an electronic device according to an example.
FIG. 17 is a block diagram of an electronic device according to another example.

### DETAILED DESCRIPTION

In order to enable those of ordinary skill in the art to better understand the technical solutions of the disclosure, the technical solutions in embodiments of the disclosure will be described clearly and completely with reference to the accompanying drawings.

It should be noted that the terms "first" and "second" in the specification, claims and the above-mentioned drawings of the disclosure are used to distinguish similar objects, and not necessarily used to describe a specific order or sequence. It should be understood that the data used in this way can be interchanged under appropriate circumstances, so that embodiments of the disclosure described herein can be implemented in an order other than those illustrated or described herein. The implementations described in the following exemplary embodiments do not represent all implementations consistent with the disclosure. Rather, they are merely examples of apparatuses and methods consistent with some aspects of the disclosure as detailed in the appended claims.

It should also be noted that both the user information (including but not limited to user device information, user personal information, etc.) and data (including but not limited to display data, analysis data, etc.) are information and data authorized the user or fully authorized by the parties.

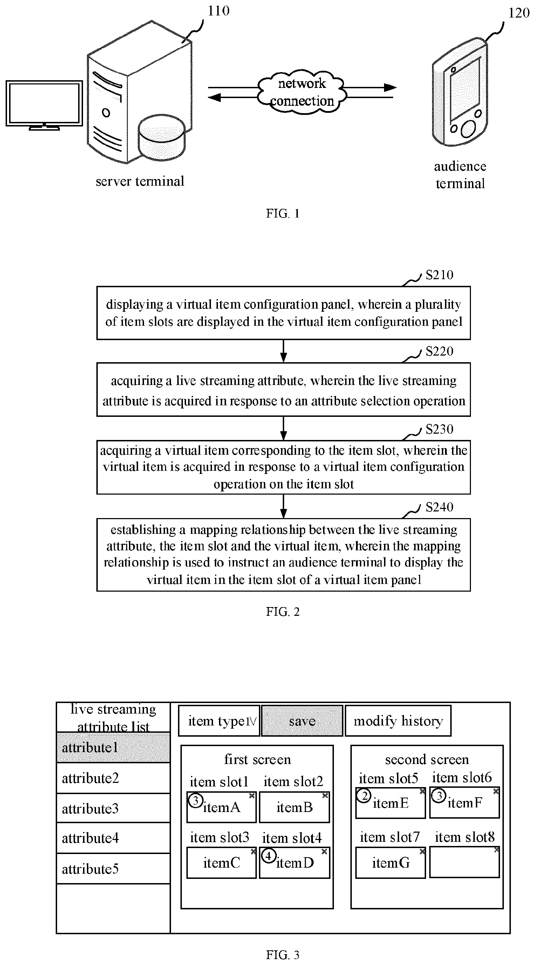

The display control method for the virtual item provided by the disclosure can be applied to the application environment shown in FIG. 1. The server terminal 110 interacts with the audience terminal 120 through the network. A first application for configuring virtual items is installed in the server terminal 110. The server terminal 110 displays the virtual item configuration panel through the first application, such that the user obtains the mapping relationship between the live streaming attribute, the item slot and the virtual item through configuration of the virtual item configuration panel. The server terminal 110 stores the mapping relationship. Further, the server terminal 110 may also send the mapping relationship to the audience terminal 120, such that the audience terminal 120 stores the mapping relationship in a local database. A second application that can be used to watch the live streaming video is installed in the audience terminal 120. When the audience terminal 120 detects the virtual item acquisition request, the target item slot conforming to the current live streaming attribute and the target virtual item corresponding to the target item slot obtained from the mapping relationship are acquired. The audience terminal 120 displays the target virtual item in the target item slot.

The server terminal 110 may be implemented by an independent server or a server cluster composed of a plurality of servers. The audience terminal 120 can be, but not limited to, various personal computers, notebook computers, smart phones, tablet computers, and portable wearable devices.

FIG. 2 is a flow chart of a display control method for a virtual item according to an exemplary embodiment. As shown in FIG. 2, the display control method for a virtual item is applied to a server terminal and includes following steps.

In S210, a virtual item configuration panel is displayed, wherein a plurality of item slots are displayed in the virtual item configuration panel.

The virtual item may refer to network items with usage value and exchange value through design and operation of the system platform in a specific virtual environment of the network. For example, the virtual item may be a virtual gift, a virtual prop, and the like.

The virtual item configuration panel can be understood as an editable form of the virtual item panel displayed by the audience terminal. Both the virtual item configuration panel and the virtual item panel displayed by the audience terminal include a plurality of item slots, and it is not excluded that one item slot is included. In the embodiment, the number of item slots in the virtual item configuration panel is greater than or equal to the number of item slots in the virtual item panel. The difference is that the item slots in the virtual item configuration panel can be used to configure, store, and display virtual items, but not limited to, so that the virtual items in each item slot can be changed. The item slots in the virtual item panel are used to store and display virtual items.

It can be understood that the item slots in the virtual item configuration panel have a corresponding relationship with the item slots in the virtual item panel, and a corresponding relationship can be established between them two through the unique slot id (identity document, identification), so that the item slots having a corresponding relationship in the virtual item configuration panel and the virtual item panel display the same virtual item.

In some embodiments of the disclosure, when the server terminal detects a panel configuration operation triggered by the user through the virtual item panel, the virtual item configuration panel is displayed, and a plurality of item slots are displayed in the virtual item configuration panel.

In S220, a live streaming attribute is acquired, wherein the live streaming attribute is acquired in response to an attribute selection operation.

In the embodiment, the live streaming attribute is a way of integrating and classifying the live streaming room. The live streaming attribute can be determined according to inherent attributes such as the live streaming room, the anchor account, and the audience account. For example, the live streaming attribute can be determined according to the gender of the anchor, the city of the anchor, and the type of the live streaming room. Alternatively, the live streaming attribute can be an attribute that satisfies a custom condition, for example, the number of fans of the anchor exceeds a threshold. The attribute selection operation of the live streaming attribute can be triggered by clicking, preset gestures, voice commands, or the like.

In some possible embodiments, a general live streaming attribute can be set. When the audience terminal fails to hit any live streaming attribute except for the general live streaming attribute, the audience terminal is made to hit the general live streaming attribute, and then the audience terminal displays the virtual item panel corresponding to the general live streaming attribute.

In some embodiments of the disclosure, when the server terminal detects an attribute selection operation of the live streaming attribute triggered by the user through the virtual item configuration panel, the selected live streaming attribute is acquired. FIG. 3 exemplarily shows a virtual item configuration panel in configuration displayed by a server terminal. As shown in FIG. 3, the virtual item configuration panel displays a plurality of item slots, and buttons for a plurality of live streaming attributes, i.e., attribute 1 ~ attribute 5. The user can perform a click operation on the button of the live streaming attribute that needs to be configured (for example, attribute 1 in FIG. 3), so that the server terminal acquires the selected live streaming attribute in response to the click operation.

Further, in each item slot of the virtual item configuration panel, virtual items that can be currently displayed at the audience terminal may be displayed. Continuing to refer to FIG. 3, the currently selected live streaming attribute is attribute 1, and each item slot displays a virtual item that can be currently displayed at the audience terminal conforming to attribute 1.

In S230, a virtual item corresponding to the item slot is acquired, wherein the virtual item is acquired in response to a virtual item configuration operation on the item slot.

In some embodiments of the disclosure, the virtual item configuration operation can be triggered by clicking, dragging, preset gestures, voice commands, or the like. When the server terminal detects the virtual item configuration operation performed by the user on each item slot that needs to be configured, the virtual item corresponding to each item slot is acquired, and the corresponding virtual item is displayed in each item slot.

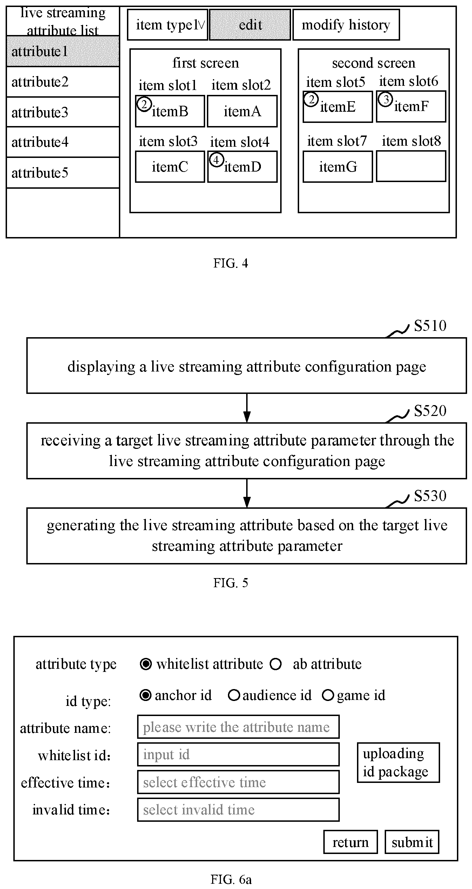

FIG. 4 exemplarily shows a panel obtained by configuring the virtual item configuration panel shown in FIG. 3. As shown in FIG. 4, if the virtual item in item slot 1 needs to be changed from item A to item B, the user can drag item B in item slot 2 to item slot 1, so that the server terminal acquires the virtual item corresponding to item slot 1 as item B, and displays item B in item slot 1, to complete the configuration of item slot 1.

In S240, a mapping relationship between the live streaming attribute, the item slot and the virtual item is established, wherein the mapping relationship is used to instruct an audience terminal to display the virtual item in the item slot of a virtual item panel.

In some embodiments of the disclosure, after the configuration of the item slot in the virtual item configuration panel is completed, the server terminal establishes a mapping relationship between the live streaming attribute, the item slot and the virtual item, and stores the mapping relationship.

Further, the server terminal sends the virtual item corresponding to the item slot to the audience terminal according to the mapping relationship. For example, the server terminal determines that the live streaming attribute of the live streaming room currently displayed by the audience terminal is a game live streaming room. The game live streaming room includes item slot 1, item slot 2, and item slot 3. The item slot 1 corresponds to virtual item A, item slot 2 corresponds to virtual item B, and item slot 3 corresponds to virtual item C. The server terminal sends the virtual item respectively corresponding to each item slot to the audience terminal, so that the audience terminal displays item slot 1, item slot 2 and item slot 3 in the virtual item panel, and virtual item A is displayed in item slot 1, virtual item B is displayed in item slot 2, and virtual item C is displayed in item slot 3.

In the above-mentioned display control method for the virtual item, the configuration manner of virtual items is visually deployed, and the virtual item configuration panel is displayed in the screen of the server terminal. Both the virtual item configuration panel and the virtual item panel presented by the audience terminal contain a plurality of item slots. In response to the attribute selection operation, the server terminal acquires the selected live streaming attribute. In response to the virtual item configuration operation on the item slot, the server terminal acquires the virtual item corresponding to the item slot. Then, a mapping relationship between the live streaming attribute, the item slot and the virtual item is established. The mapping relationship is used to instruct the audience terminal to display the corresponding virtual item in the item slot of the virtual item panel. By introducing the concept of the item slot, virtual items can be obtained by visual configuration in units of item slots, which greatly improves the flexibility of configuring virtual items and reduces the time cost of configuring virtual items. By introducing the concept of the live streaming attribute, the corresponding relationship between the live streaming attribute and the virtual item panel is established, so that the styles of the virtual item panels displayed by different audience terminals are different, thereby enhancing the diversity of the virtual item panels displayed by the audience terminal.

In an exemplary embodiment, the live streaming attribute can be customized. For example, a whitelist attribute is established for a specified anchor account and/or audience account; or, an ab experiment attribute is established by customizing the specified live streaming room conditions (for example, the number of audiences watching the live streaming room). As shown in FIG. 5, the method further includes following steps.

In S510, a live streaming attribute configuration page is displayed.

In some embodiments of the disclosure, the live streaming attribute configuration page may be displayed in response to an attribute configuration operation of the live streaming attribute. The attribute configuration operation can be triggered through preset setting menus, attribute configuration controls, and so on. After the server terminal receives the attribute configuration operation, the live streaming attribute configuration page is displayed. The live streaming attribute configuration page can include a plurality of editing areas, for example, a basic attribute (such as attribute name, attribute id) editing area, an attribute condition editing area, etc.

In S520, a target live streaming attribute parameter is received through the live streaming attribute configuration page.

The target live streaming attribute parameter refers to a parameter configured for the live streaming attribute, and is used to define a content and an attribute of at least one of a live streaming room and an anchor account. At least one of a live streaming room and an anchor account is only a live streaming room, only an anchor account, or both the living streaming room and the anchor account.

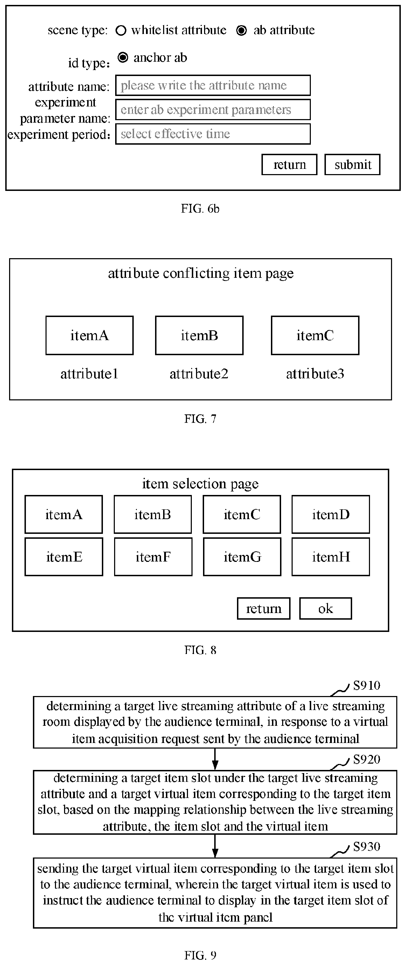

In some embodiments of the disclosure, the server terminal may receive the target live streaming attribute parameter configured by the user through each editing area in the live streaming attribute configuration page. For example, the customizable live streaming attribute includes a whitelist attribute and an ab experiment attribute. When the server terminal detects the selection operation of the whitelist attribute, the live streaming attribute configuration page shown in FIG. 6a is displayed. Referring to FIG. 6a, the live streaming attribute configuration page of the whitelist attribute includes an id type editing area, an attribute name editing area, an id input area, an effective time editing area, and an invalid time editing area. Correspondingly, when the server terminal detects the selection operation to the ab experiment attribute, the live streaming attribute configuration page shown in FIG. 6b is displayed. Referring to FIG. 6b, the live streaming attribute configuration page of the ab experiment attribute includes an id type editing area, an attribute name editing area, an input area for ab experiment parameters, and an experiment period.

In S530, the live streaming attribute is generated based on the target live streaming attribute parameter.

In some embodiments of the disclosure, when the server terminal detects the saving operation of the live streaming attribute, the live streaming attribute is generated according to the target live streaming attribute parameter in each editing area in the live streaming attribute configuration page. For example, if the server terminal receives the target live streaming attribute parameters through the live streaming attribute configuration page, the parameters including: id type-anchor id, attribute name-A whitelist; whitelist id-A anchor; effective time-June 4, 2021, invalid time-July 4, 2021, then, the server terminal can generate a whitelist attribute for anchor A The effective time period of the whitelist attribute is from June 4, 2021 to July 4, 2021.

Further, the server terminal may display the generated live streaming attribute in the live streaming attribute list, and then configure each item slot under the live streaming attribute according to the content described in S210 to S240.

In this embodiment, by supporting custom live streaming attributes, different audience terminals can display virtual item panels that more conform to attributes of the live streaming room, which increases the variety of virtual item panels of the audience terminal, and at the same time helps to improve the enthusiasm of the audience to use virtual items and enhances the interaction between the audience and the anchor.

In an exemplary embodiment, the method further includes: acquiring an amount of types of the virtual item that has been configured in the item slots under a plurality of live streaming attributes, from the established mapping relationship between the live streaming attribute, the item slot and the virtual item, when there are the plurality of live streaming attributes; generating identification information based on the amount of types of the virtual item; displaying the identification information in the item slot.

In some embodiments of the disclosure, when there are a plurality of live streaming attributes in the virtual item configuration panel, the server terminal performs clustering processing on the configured virtual items with a plurality of live streaming attributes under each item slot, and obtains the number of types of the virtual item corresponding to each item slot. The server terminal generates identification information corresponding to each item slot according to the number of types, and displays the identification information corresponding to each item slot in each item slot.

Further, when the number of types corresponding to the item slot is 0 or 1, the server terminal may not display the identification information, thereby simplifying the display content of the virtual item configuration panel.

Further, the identification information can be updated in real time along with the real-time configuration of the virtual item in the item slot, thereby ensuring the accuracy of the identification information.

Further, the display style of the identification information can be preconfigured, and the display style can be, but not limited to, display color (e.g., red), display shape (e.g., square), a display position in the item slot (e.g., top left of the item slot), display fonts, etc.

Continuing to refer to FIG. 3, as shown in FIG. 3, identification information ③ is displayed in item slot 1, indicating that in item slot 1, the number of types of configured virtual items of 5 live streaming attributes is 3.

In this embodiment, when there are a plurality of live streaming attributes, the number of types of configured virtual items corresponding to each item slot is acquired, and the number of types is displayed at each item slot in the form of identification information, so that users can intuitively learn the overall configuration of virtual items of a plurality of live streaming attributes, which simplifies the way for users to learn about information.

In an exemplary embodiment, the identification information may be configured as an access portal for the virtual item. The method further includes: acquiring and displaying the configured virtual item and the live streaming attribute corresponding to the virtual item, wherein the configured virtual item is acquired in response to a triggering operation on the identification information.

In the embodiment, the triggering operation of the identification information may be triggered by a click, a preset gesture, a voice command, or the like. When the server terminal detects the trigger operation for the identification information in the item slot, the attribute conflicting item page is displayed. The attribute conflict item page includes all kinds of configured virtual items of a plurality of live streaming attributes under the item slot, as well as the live streaming attribute corresponding to each virtual item. Continue to take FIG. 3 as an example, the number of types of virtual items of 5 live streaming attributes in item slot 1 is 3. The virtual item with attribute 1 is item A, the virtual item with attribute 2 is item B, the virtual item with attribute 3 is item C, attribute 4 and attribute 5 have not been configured with virtual items. When the server terminal detects the click operation on the identification information ③, the attribute conflicting item page shown in FIG. 7 is displayed.

In some possible embodiments, the attribute conflicting item page may be presented in the form of a pop-up page on the virtual item configuration panel page. At this time, the virtual item configuration panel page may be displayed in a semitransparent form.

In this embodiment, by configuring the identification information as the access portal for accessing virtual items, the user can view the conflict of items of a plurality of live streaming attributes by performing simple operations such as clicking, which greatly simplifies the way of users to learn about information and improves the configuration efficiency of virtual items.

In an exemplary embodiment, S230 of acquiring the virtual item corresponding to the item slot includes: acquiring candidate virtual items, wherein the candidate virtual items are acquired in response to the virtual item configuration operation on the item slot; acquiring the virtual item corresponding to the item slot from the candidate virtual items, wherein the virtual item is acquired in response to a selection operation on the candidate virtual items.

In the embodiment, the candidate virtual items refer to selectable virtual items. For example, the candidate virtual items may be all valid virtual items existing in the current system.

In some embodiments of the disclosure, the virtual item configuration operation can be triggered by a click, a voice command, or the like. In this embodiment, when the virtual item configuration panel is in an editable state (for example, by clicking the edit button in FIG. 3), each item slot is an access entry for accessing the candidate virtual item. When the server terminal detects a trigger operation on an item slot, the item selection page is displayed. The item selection page includes a plurality of candidate virtual items. The plurality of candidate virtual items can be displayed in the item selection page in the form of a list, an image grid, and the like. When the server terminal detects a selection operation on a certain candidate virtual item, the selected candidate virtual item is acquired, and the selected candidate virtual item is displayed in the item slot.

FIG. 8 exemplarily shows a schematic diagram of an item selection page. The item selection page can be presented in the form of a pop-up page on the virtual item configuration panel page. At this time, the virtual item configuration panel page can be displayed in a semitransparent form. As shown in FIG. 8, as for a certain item slot, when the server terminal detects the click operation on the virtual item G, the virtual item G will be regarded as the virtual item corresponding to the item slot, and the virtual item G will be displayed in the item slot.

In this embodiment, by displaying the candidate virtual items in the form of a page, it is convenient for the user to view the selectable virtual items, so that the user can complete the configuration of the virtual items through a simple operation, which greatly improves the configuration efficiency of the virtual items.

In an exemplary embodiment, the method further includes: displaying a generated history panel configuration record in response to a history record viewing operation.

In some embodiments of the disclosure, the history record viewing operation may be triggered by means of a history record viewing control, a preset setting menu, or the like. When the server terminal detects a history record viewing operation, all or part of the history panel configuration records that have been generated is displayed. Part of the history panel configuration record may be any one or more of records generated within a preset time period, records of a preset number, records of specified account configuration, and the like. When there are a plurality of history panel configuration records, the plurality of history panel configuration records can be sorted and displayed according to the chronological order of the history panel configuration records. For example, the history panel configuration record that is closer to the current time is displayed to the front. Each history panel configuration record may include, but not limited to, the established mapping relationship between the live streaming attribute, the item slot and the virtual item; and information of the operator, etc.

In this embodiment, by supporting a batch viewing operation of history records, the user can quickly learn about the history configuration of virtual items.

In an exemplary embodiment, as shown in FIG. 9, after establishing the mapping relationship between the live streaming attribute, the item slot and the virtual item, following steps are further included.

In S910, a target live streaming attribute of a live streaming room displayed by the audience terminal is determined in response to a virtual item acquisition request sent by the audience terminal.

In the embodiment, the virtual item acquisition request may be generated by triggering the virtual item control, and the virtual item control may be displayed in the live streaming room page displayed by the audience terminal. When the audience terminal detects the triggering operation on the virtual item control, a virtual item acquisition request is sent to the server terminal. The virtual item acquisition request may also be a request autonomously triggered by the audience terminal. For example, when the audience terminal detects an entry request for the current live streaming room, the virtual item acquisition request is autonomously generated.

The virtual item acquisition request carries the audience terminal information. The audience terminal information can be, but not limited to: audience account information, such as the audience account identification, region, audience gender, the association relationship between the audience account and the anchor (for example, the following relationship), etc.; the information of the live streaming room currently displayed by the audience terminal, for example, the type of the live streaming room (game live streaming room, e-commerce live streaming room, etc.), the number of audiences, etc.; anchor account information, such as the anchor account identification, the number of fans of the anchor, the number of works of the anchor, etc.

In some embodiments of the disclosure, after receiving the virtual item acquisition request, the server compares information of the audience terminal with a plurality of live streaming attributes. The live streaming attribute that is consistent with information of the audience terminal is acquired as the target live streaming attribute. For example, if the live streaming room type included in information of the the audience terminal is a game live streaming room, the live streaming attribute of "game live streaming room" can be used as the target live streaming attribute.

In S920, a target item slot under the target live streaming attribute and a target virtual item corresponding to the target item slot are determined based on the mapping relationship between the live streaming attribute, the item slot and the virtual item.

In S930, the target virtual item corresponding to the target item slot is sent to the audience terminal, such that the audience terminal displays the target virtual item in the target item slot of the virtual item panel.

In some embodiments of the disclosure, the server terminal acquires at least one target item slot under the target live streaming attribute and a target virtual item corresponding to each target item slot from the mapping relationship between the live streaming attribute, the item slot and the virtual item. The server terminal sends the target virtual item corresponding to each target item slot to the audience terminal, so that the audience terminal displays the target virtual item corresponding to each target item slot in each target item slot of the virtual item panel.

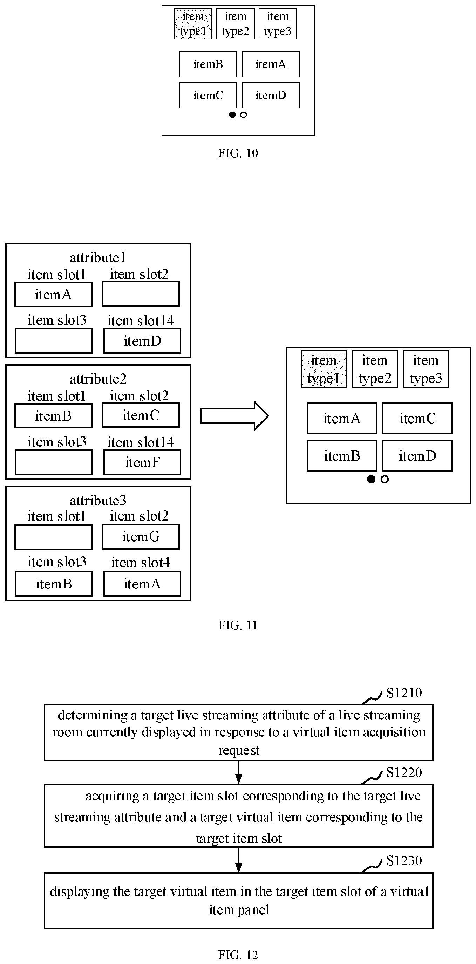

FIG. 10 exemplarily shows a schematic diagram of a virtual item panel displayed by the audience terminal when the target live streaming attribute is attribute 1 in FIG. 3. As shown in FIG. 10, the layout of the plurality of item slots in the audience terminal and the server terminal is the same, and the same virtual item is displayed in each item slot.

Further, continuing to refer to FIG. 10, the item types of the virtual items may include various types, such as gifts, props, fan clubs, and the like. For each item type, the virtual item corresponding to the item slot can be configured with reference to the display control method for the virtual item in the disclosure.

In this embodiment, by storing the mapping relationship between the live streaming attribute, the item slot and the virtual item in the server terminal, the server terminal can centrally process the acquisition requests of virtual items sent by each audience terminal, which can ensure the accuracy and data consistency of the virtual items. By configuring the item slot in the virtual item panel of the audience terminal that is consistent with the virtual item configuration panel of the server terminal, the audience terminal can display the configured virtual item in the corresponding item slot, thereby improving the diversity of the virtual item panel displayed at the audience terminal.

In an exemplary embodiment, when there are a plurality of the target live streaming attributes, S920 of determining the target item slot under the target live streaming attribute and the target virtual item corresponding to the target item slot based on the mapping relationship between the live streaming attribute, the item slot and the virtual item includes: searching and finding the item slot under each of the target live streaming attributes and the virtual item corresponding to the item slot from the mapping relationship; determining the target item slot and the target virtual item corresponding to the target item slot based on the item slot under each of the target live streaming attributes and the virtual item corresponding to the item slot.

In some embodiments of the disclosure, if the server terminal acquires a plurality of live streaming attributes that are consistent with the audience terminal information after comparing the audience terminal information with the plurality of live streaming attributes, the plurality of live streaming attributes are used as the target live streaming attributes. For example, the type of the live streaming room included in the audience terminal information is a game live streaming room, and the anchor account A. The game live streaming room and whitelist attribute-anchor account A exist in a plurality of live streaming attributes, then both the live streaming attribute "game live room" and the whitelist attribute are used as the target live streaming attribute. The server terminal acquires at least one item slot under each target live streaming attribute and a virtual item corresponding to each item slot from the mapping relationship.

For each target item slot, a target virtual item may be determined from virtual items of a plurality of target live streaming attributes according to a preconfigured item selection strategy.

In a possible embodiment, for each target item slot, one may be randomly selected from virtual items under a plurality of target live streaming attributes as the target virtual item.

In a possible embodiment, the priority of each virtual item may be preconfigured. For each target item slot, the virtual item with the highest priority is selected from the virtual items under a plurality of the target live streaming attributes as the target virtual item.

In a possible embodiment, the usage popularity of each virtual item can be acquired. For each target item slot, the virtual item with the highest usage popularity is selected from the virtual items under a plurality of the target live streaming attributes as the target virtual item.

In a possible embodiment, after it is determined that there are a plurality of target live streaming attributes, one target live streaming attribute can be selected from the plurality of target live streaming attributes, and then the item slot under the selected target live streaming attribute and the virtual item corresponding to each item slot are acquired for display.

In this embodiment, when there are a plurality of live streaming attributes that match the audience terminal information, the target item slot and the target virtual item are determined according to the item selection strategy, which can improve the matching degree of the target item slot, the target virtual item with the live room and/or the audience terminal, promote the audience to more use the virtual item, and improve the use experience of the audience and the anchor.

In an exemplary embodiment, determining the target item slot and the target virtual item corresponding to the target item slot based on the item slot under each of the target live streaming attributes and the virtual item corresponding to the item slot includes: acquiring an attribute priority of each of the target live streaming attributes; obtaining the target item slot and the target virtual item from item slots of the plurality of target live streaming attributes and virtual items corresponding to the item slots, based on the attribute priority.

In some embodiments of the disclosure, the priority of each target live streaming attribute is preconfigured. For each target item slot, the virtual item corresponding to the target live streaming attribute with the highest priority is selected from the virtual items under a plurality of target live streaming attributes, to serve as the target virtual item. FIG. 11 exemplarily shows a schematic diagram of determining a target virtual item. As shown in FIG. 11, the target live streaming attributes include attribute 1, attribute 2, and attribute 3. Attribute 1 has a higher priority than attribute 2, and attribute 2 has a higher priority than attribute 3.

Then, for item slot 1, virtual item A corresponding to attribute 1 is selected as the target virtual item;
for item slot 2, virtual item C corresponding to attribute 2 is selected as the target virtual item;
for item slot 3, virtual item B corresponding to attribute 3 is selected as the target virtual item;
for item slot 4, virtual item D corresponding to attribute 1 is selected as the target virtual item.

Further, when the same target virtual item exists in the target virtual items determined in the above manner, the target virtual items may be de-duplicated.

In this embodiment, when there are a plurality of live streaming attributes that match the audience terminal information, the target item slot and the target virtual item are determined according to the priority, and the more important virtual items can be displayed preferentially, to promote the audience to more use the virtual item.

FIG. 12 is a flowchart showing a display method for a virtual item according to an exemplary embodiment. As shown in FIG. 12, the display method for a virtual item is applied to an audience terminal and includes following steps.

In S1210, a target live streaming attribute of a live streaming room currently displayed is determined in response to a virtual item acquisition request.

The manner of generating the virtual item acquisition request may refer to the above-mentioned embodiment, which will not be described in detail here. The virtual item acquisition request carries the audience terminal information. For the content included in the audience terminal information, reference may be made to the above-mentioned embodiments, which will not be described in detail here.

In some embodiments of the disclosure, the audience terminal compares the audience terminal information with a plurality of live streaming attributes, and the live streaming attribute that is consistent with the terminal terminal information is used as the target live streaming attribute. For example, if the type of the live streaming room included in the audience terminal information is a game live streaming room, the live streaming attribute "game live streaming room" is used as the target live streaming attribute.

In S1220, a target item slot corresponding to the target live streaming attribute and a target virtual item corresponding to the target item slot are acquired.

The target item slot and the target virtual item corresponding to the target item slot are determined based on a mapping relationship between a live streaming attribute, an item slot and a virtual item. The mapping relationship is configured according to the above-mentioned display control method for the virtual item.

In some embodiments of the disclosure, after the server terminal establishes the mapping relationship between the live streaming attribute, the item slot and the virtual item, the mapping relationship can also be sent to the audience terminal, so that the audience terminal stores the mapping relationship in a local database. After determining the target live streaming attribute, the audience terminal acquires at least one target item slot under the target live streaming attribute and a target virtual item corresponding to each target item slot from the stored mapping relationship.

In S1230, the target virtual item is displayed in the target item slot of a virtual item panel.

In some embodiments of the disclosure, the audience terminal displays the virtual item panel. The virtual item panel includes a plurality of item slots, but does not exclude the case of one item slot. The layout of a plurality of item slots in the virtual item panel can be the same as the layout of a plurality of item slots of the server terminal. After determining the target item slot and the target virtual item corresponding to each target item slot, the audience terminal displays the target virtual item corresponding to each target item slot in each target item slot of the virtual item panel.

In this embodiment, by storing the mapping relationship between live the streaming attribute, the item slot and the target virtual item in the audience terminal, each audience terminal can obtain the currently displayed target virtual item according to the information of the audience terminal by itself, which alleviates the operating pressure of the server, and improves the acquisition efficiency of the virtual item. By configuring the item slot in the virtual item panel of the audience terminal that is consistent with the virtual item configuration panel of the server terminal, the audience terminal can display the configured target virtual item in the corresponding item slot, thereby improving the diversity of the virtual item panel displayed by the audience terminal.

In an exemplary embodiment, when there are a plurality of target live streaming attributes, S1220 of acquiring the target item slot corresponding to the target live streaming attribute and the target virtual item corresponding to the target item slot includes: acquiring an item slot under each of the target live streaming attributes and the virtual item corresponding to the item slot based on the mapping relationship; determining the target item slot and the target virtual item corresponding to the target item slot based on the item slot under each of the target live streaming attributes and the virtual item corresponding to the item slot.

In some embodiments of the disclosure, if the audience terminal compares the audience terminal information with a plurality of live streaming attributes to acquire a plurality of live streaming attributes that are consistent with the audience terminal information, the plurality of live streaming attributes are used as the target live streaming attributes. The audience terminal acquires at least one item slot under each target live streaming attribute and a virtual item corresponding to each item slot from the mapping relationship. For each target item slot, a target virtual item can be determined from virtual items under a plurality of target live streaming attributes according to a preconfigured item selection strategy. For the specific implementation of the item selection strategy, reference may be made to the foregoing embodiments, which will not be described in detail here.

In this embodiment, when there are a plurality of live streaming attributes that match the audience terminal information, the target item slot and the target virtual item are determined according to the item selection strategy, which can improve the matching degree of the target item slot, the target virtual item with the live room and/or the audience terminal, promote the audience to more use the virtual item, and improve the use experience of the audience and the anchor.

In an exemplary embodiment, said determining the target item slot and the target virtual item corresponding to the target item slot based on the item slot under each of the target live streaming attributes and the virtual item corresponding to the item slot includes: acquiring an attribute priority of each of the target live streaming attributes, and determining the target item slot and the target virtual item corresponding to the target item slot based on the attribute priority.

In some embodiments of the disclosure, the priority of each target live streaming attribute is preconfigured. For each target item slot, the virtual item corresponding to the target live streaming attribute with the highest priority is selected from the virtual items under a plurality of target live streaming attributes, to serve as the target virtual item. In this embodiment, when there are a plurality of live streaming attributes that match the audience terminal information, the target item slot and the target virtual item are determined according to the priority, and more important virtual items can be displayed preferentially, to promote the audience to more use the virtual item.

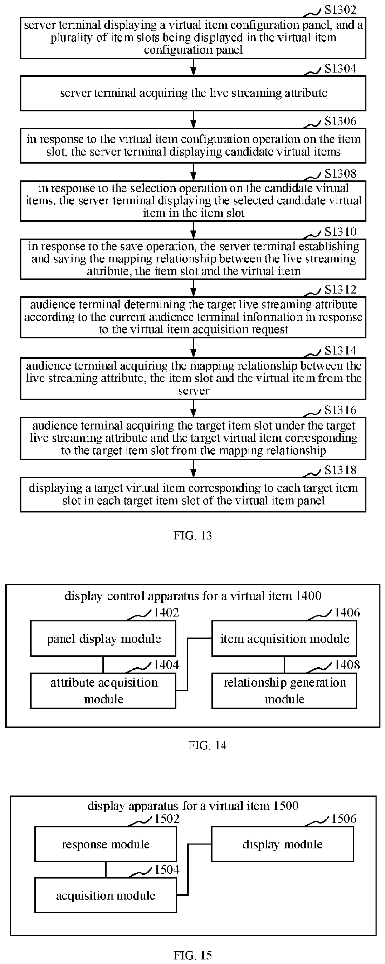

FIG. 13 is a flow chart showing a display control method for the virtual item according to an exemplary embodiment. The display control method for the virtual item is applied to a display control system for the virtual item. The display control system includes an audience terminal and a server terminal. As shown in FIG. 13, following steps are included.

Configuration stage of virtual items of the server terminal:
In S1302, the server terminal displays a virtual item configuration panel, and a plurality of item slots are displayed in the virtual item configuration panel.

In S1304, the server terminal acquires the live streaming attribute.

The live streaming attribute may be a preset live streaming attribute, for example, each existing live streaming room type is used as a live streaming attribute. The live streaming attribute may also be a self-defined live streaming attribute, such as a whitelist attribute.

In S1306, in response to the virtual item configuration operation on the item slot, the server terminal displays candidate virtual items.

In S1308, in response to the selection operation on the candidate virtual items, the server terminal displays the selected candidate virtual item in the item slot.

In S1310, in response to the save operation, the server terminal establishes and saves the mapping relationship between the live streaming attribute, the item slot and the virtual item.

In the display stage of the virtual items of the audience terminal, for example, the audience terminal voluntarily determines the target item slot and the target virtual item by itself.

In S1312, the audience terminal determines the target live streaming attribute according to the current audience terminal information in response to the virtual item acquisition request.

In S1314, the audience terminal acquires the mapping relationship between the live streaming attribute, the item slot and the virtual item from the server.

In S1316, the audience terminal acquires the target item slot under the target live streaming attribute and the target virtual item corresponding to the target item slot from the mapping relationship.

When a plurality of target live streaming attributes are determined according to the audience terminal information, the item slot under each target live streaming attribute and the virtual item corresponding to the item slot can be acquired from the mapping relationship, and the target item slot and the target virtual item corresponding to the target item slot can be determined with reference to the above embodiment.

In S1318, a target virtual item corresponding to each target item slot is displayed in each target item slot of the virtual item panel.

It should be understood that although the steps in the above flow charts are displayed in sequence according to the arrows, these steps are not necessarily executed in the sequence indicated by the arrows. Unless explicitly stated herein, the execution of these steps is not strictly limited to the order, and these steps may be performed in other orders. Moreover, at least a part of the steps in the above flow chart may include a plurality of steps or stages. These steps or stages are not necessarily executed at the same time, but may be executed at different times. The execution sequence of these steps or stages is also not necessarily performed sequentially, but may be performed alternately with other steps or at least a portion of steps or stages in the other steps.

FIG. 14 is a block diagram of a display control apparatus 1400 for a virtual item according to an exemplary embodiment. Referring to FIG. 14, the apparatus includes a panel display module 1402, an attribute acquisition module 1404, an item acquisition module 1406 and a relationship generation module 1408.

The panel display module 1402 is configured to display a virtual item configuration panel, wherein a plurality of item slots are displayed in the virtual item configuration panel. The attribute acquisition module 1404 is configured to acquire a live streaming attribute, wherein the live streaming attribute is acquired in response to an attribute selection operation. The item acquisition module 1406 is configured to acquire a virtual item corresponding to the item slot, wherein the virtual item is acquired in response to a virtual item configuration operation on the item slot. The relationship generation module 1408 is configured to establish a mapping relationship between the live streaming attribute, the item slot and the virtual item, wherein the mapping relationship is used to instruct an audience terminal to display the virtual item in the item slot of a virtual item panel.

In an exemplary embodiment, the apparatus 1400 further includes: a configuration page display module configured to display a live streaming attribute configuration page; a receiving module configured to receive a target live streaming attribute parameter through the live streaming attribute configuration page, wherein the live streaming attribute parameter is used to define a content and an attribute of a live streaming room and/or an anchor account; an attribute generation module configured to generate the live streaming attribute based on the target live streaming attribute parameter.

In an exemplary embodiment, the apparatus 1400 further includes: a quantity acquisition module configured to acquire an amount of types of the virtual item that has been configured in the item slots under a plurality of live streaming attributes, from the established mapping relationship between the live streaming attribute, the item slot and the virtual item, when there are a plurality of the live streaming attributes; an identification generation module configured to generate identification information based on the amount of types of the virtual item; an identification display module configured to display the identification information in the item slot.

In an exemplary embodiment, the apparatus 1400 further includes: an item and attribute display module configured to acquire and display the configured virtual item and the live streaming attribute corresponding to the virtual item, wherein the configured virtual item is acquired in response to a triggering operation on the identification information.

In an exemplary embodiment, the item acquisition module 1406 includes: a candidate item acquisition unit configured to acquire candidate virtual items, wherein the candidate virtual items are acquired in response to the virtual item configuration operation on the item slot; an item acquisition unit configured to acquire the virtual item corresponding to the item slot from the candidate virtual items, wherein the virtual item is acquired in response to a selection operation on the candidate virtual items.

In an exemplary embodiment, the apparatus 1400 further includes: an attribute determination module configured to determine a target live streaming attribute of a live streaming room displayed by the audience terminal, in response to a virtual item acquisition request sent by the audience terminal; a slot and item determination module configured to determine a target item slot under the target live streaming attribute and a target virtual item corresponding to the target item slot, based on the mapping relationship between the live streaming attribute, the item slot and the virtual item; a sending module configured to send the target virtual item corresponding to the target item slot to the audience terminal, such that the audience terminal displays the target virtual item in the target item slot of the virtual item panel.

In an exemplary embodiment, when there are a plurality of the target live streaming attributes, the slot and item determination module includes: a searching unit configured to search and find the item slot under each of the target live streaming attributes and the virtual item corresponding to the item slot from the mapping relationship; a slot and item determination unit configured to determine the target item slot and the target virtual item corresponding to the target item slot based on the item slot under each of the target live streaming attributes and the virtual item corresponding to the item slot.

In an exemplary embodiment, the slot and item determination unit is configured to acquire an attribute priority of each of the target live streaming attributes; and obtain the target item slot and the target virtual item from item slots of the plurality of target live streaming attributes and virtual items corresponding to the item slots, based on the attribute priority.

In an exemplary embodiment, the apparatus 1400 further includes: a record display module configured to display a generated history panel configuration record in response to a history record viewing operation, wherein the history panel configuration record includes the established mapping relationship between the live streaming attribute, the item slot and the virtual item.

FIG. 15 is a block diagram of a display apparatus 1500 for a virtual item according to an exemplary embodiment. Referring to FIG. 15, the apparatus includes a response module 1502, an acquisition module 1504, and a display module 1506.

The response module 1502 is configured to determine a target live streaming attribute of a currently displayed live streaming room. The acquisition module 1504 is configured to acquire a target item slot corresponding to the target live streaming attribute and a target virtual item corresponding to the target item slot, wherein the target item slot and the target virtual item corresponding to the target item slot are determined based on a preconfigured mapping relationship between a live streaming attribute, an item slot and a virtual item, the mapping relationship is obtained through configuration of a virtual item configuration panel displayed by a server. The display module 1506 is configured to display the target virtual item in the target item slot of a virtual item panel.

In an exemplary embodiment, when there are a plurality of target live streaming attributes, the acquisition module 1504 includes: an acquisition unit configured to acquire an item slot under each of the target live streaming attributes and the virtual item corresponding to the item slot based on the mapping relationship; a slot and item determination unit configured to determine the target item slot and the target virtual item corresponding to the target item slot based on the item slot under each of the target live streaming attributes and the virtual item corresponding to the item slot.

In an exemplary embodiment, the slot and item determination unit is configured to acquire an attribute priority of each of the target live streaming attributes, and determine the target item slot and the target virtual item corresponding to the target item slot based on the attribute priority.

Regarding the apparatus in the above-mentioned embodiment, the specific manner in which each module performs operations has been described in detail in the embodiment of the method, and will not be described in detail here.

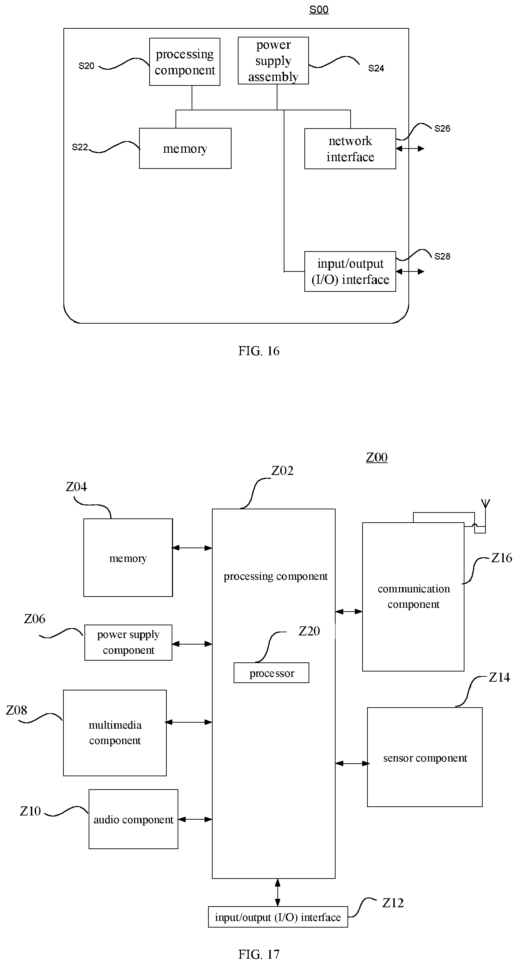

FIG. 16 is a block diagram of an electronic device S00 of display control for a virtual item according to an exemplary embodiment. For example, the electronic device S00 may be a server. Referring to FIG. 16, the electronic device S00 includes a processing component S20, which further includes one or more processors, and a memory resource represented by a memory S22 for storing instructions executable by the processing component S20, such as application programs. The application program stored in the memory S22 may include one or more modules, each corresponding to a set of instructions. In addition, the processing component S20 is configured to execute the instruction to execute the above-mentioned display control method for the virtual item.

The electronic device S00 may also include a power supply assembly S24 configured to perform power management of the electronic device S00, a wired or wireless network interface S26 configured to connect the electronic device S00 to a network, and an input/output (I/O) interface S28. The electronic device S00 can operate an operating system stored in the memory S22, such as Windows Server, Mac OS X, Unix, Linux, FreeBSD or the like.

In an exemplary embodiment, a computer-readable storage medium including instructions, such as a memory S22 including instructions, is also provided, and the instructions can be executed by the processor of the electronic device S00 to complete the above method. The storage medium may be a computer-readable storage medium, for example, the computer-readable storage medium may be ROM, random access memory (RAM), CD-ROM, magnetic tape, floppy disk, optical data storage devices, and the like.

In an exemplary embodiment, a computer program product is also provided, including a computer program, which, when executed by a processor, implements the display control method for a virtual item according to any one of the foregoing embodiments.

FIG. 17 is a block diagram of an electronic device Z00 for displaying virtual items according to an exemplary embodiment. For example, the electronic device Z00 may be a mobile phone, computer, digital broadcast terminal, messaging device, game console, tablet device, medical device, fitness device, personal digital assistant, and the like.

Referring to FIG. 17, an electronic device Z00 may include one or more of the following components: a processing component Z02, a memory Z04, a power supply component Z06, a multimedia component Z08, an audio component Z10, an input/output (I/O) interface Z12, a sensor component Z14 and the communication component Z16.

The processing component Z02 generally controls the overall operation of the electronic device Z00, such as operations associated with display, phone calls, data communications, camera operations, and recording operations. The processing component Z02 may include one or more processors Z20 to execute instructions to perform all or part of the steps of the above-described methods. Additionally, processing component Z02 may include one or more modules to facilitate interaction between the processing component Z02 and other components. For example, the processing component Z02 may include a multimedia module to facilitate interaction between multimedia component Z08 and processing component Z02.

The memory Z04 is configured to store various types of data to support operation at the electronic device Z00. Examples of such data include instructions for any application or method operating on the electronic device Z00, contact data, phonebook data, messages, pictures, videos, and the like. The memory Z04 can be implemented by any type of volatile or non-volatile storage device or a combination thereof, such as static random access memory (SRAM), electrically erasable programmable read only memory (EEPROM), erasable Programmable Read Only Memory (EPROM), Programmable Read Only Memory (PROM), Read Only Memory (ROM), Magnetic Memory, Flash Memory, Magnetic Disk or Optical Disk.

The power supply component Z06 provides power to various components of the electronic device Z00. The power supply component Z06 may include a power management system, one or more power supplies, and other components associated with generating, managing, and distributing power to the electronic device Z00.

The multimedia component Z08 includes a screen that provides an output interface between the electronic device Z00 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, swipe, and gestures on the touch panel. The touch sensor may not only sense the boundaries of a touch or swipe action, but also detect the duration and pressure associated with the touch or swipe action. In some embodiments, the multimedia component Z08 includes a front camera and/or a rear camera. When the electronic device Z00 is in an operation mode, such as a shooting mode or a video mode, the front camera and/or the rear camera can receive external multimedia data. Each of the front and rear cameras can be a fixed optical lens system or have focal length and optical zoom capability.

The audio component Z10 is configured to output and/or input audio signals. For example, the audio component Z10 includes a microphone (MIC) that is configured to receive external audio signals when the electronic device Z00 is in operating modes, such as a calling mode, recording mode, and voice recognition mode. The received audio signal may be further stored in the memory Z04 or transmitted via the communication component Z16. In some embodiments, the audio component Z10 also includes a speaker for outputting audio signals.

The I/O interface Z12 provides an interface between the processing component Z02 and a peripheral interface module, and the above-mentioned peripheral interface module can be a keyboard, a click wheel, a button, and the like. These buttons may include, but are not limited to: a home button, volume button, start button, and lock button.

The sensor component Z14 includes one or more sensors for providing various aspects of status assessment for the electronic device Z00. For example, the sensor component Z14 can detect the open/closed state of the electronic device Z00, the relative positioning of the components. For example, the components are the display and the keypad of the electronic device Z00. The sensor component Z14 can also detect changes in the position of the electronic device Z00 or a component of the electronic device Z00, presence or absence of user contact with the electronic device Z00, orientation or acceleration/deceleration of the electronic device Z00 and temperature changes in the electronic device Z00. The sensor component Z14 may include a proximity sensor configured to detect the presence of nearby objects in the absence of any physical contact. The sensor component Z14 may also include a light sensor, such as a CMOS or CCD image sensor, for use in imaging applications. In some embodiments, the sensor component Z14 may also include an acceleration sensor, a gyroscope sensor, a magnetic sensor, a pressure sensor, or a temperature sensor.

The communication component Z16 is configured to facilitate wired or wireless communication between the electronic device Z00 and other devices. The electronic device Z00 can access wireless networks based on communication standards, such as WiFi, carrier networks (such as 2G, 3G, 4G, or 5G), or a combination thereof. In one exemplary embodiment, the communication component Z16 receives broadcast signals or broadcast related information from an external broadcast management system via a broadcast channel. In an exemplary embodiment, the communication component Z16 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the electronic device Z00 may be implemented by one or more application specific integrated circuits (ASICs), digital signal processors (DSPs), digital signal processing devices (DSPDs), programmable logic devices (PLDs), field programmable gate array (FPGA), controllers, microcontrollers, microprocessors or other electronic components, to perform the above method.

In an exemplary embodiment, there is also provided a computer-readable storage medium including instructions, such as a memory Z04 including instructions, which are executable by the processor Z20 of the electronic device Z00 to perform the above method. For example, the computer-readable storage medium may be ROM, random access memory (RAM), CD-ROM, magnetic tape, floppy disk, optical data storage device, and the like.

In an exemplary embodiment, a computer program product is also provided, including a computer program, which, when executed by a processor, implements the display method for a virtual item according to any one of the foregoing embodiments.

Other embodiments of the disclosure will readily occur to those skilled in the art upon consideration of the specification and practice of the disclosure disclosed herein. This disclosure is intended to cover any variations, uses, or adaptations of this disclosure that follow the general principles of this disclosure and include common general knowledge or conventional technical means in the technical field not disclosed by this disclosure. The specification and embodiments are to be regarded as exemplary only.

It should be understood that the disclosure is not limited to the precise structure that has been described above and shown in the drawings, and various modifications and changes can be made without departing from its scope.

## Claims

1. A display control method for a virtual item, performed by a server terminal, comprising:
displaying (S210) a virtual item configuration panel, wherein a plurality of item slots are displayed in the virtual item configuration panel;
acquiring (S220) a live streaming attribute in response to an attribute selection operation;
acquiring (S230), in response to a virtual item configuration operation on an item slot, a virtual item corresponding to the item slot; and
establishing (S240) a mapping relationship between the live streaming attribute, the item slot and the virtual item, wherein the mapping relationship is used to instruct an audience terminal to display the virtual item in the item slot of the virtual item configuration panel.

2. The method according to claim 1, further comprising:
displaying (S510) a live streaming attribute configuration page;
receiving (S520) a target live streaming attribute parameter through the live streaming attribute configuration page, wherein the target live streaming attribute parameter is used to define a content and an attribute of at least one of a live streaming room and an anchor account;
generating (S530) the live streaming attribute based on the target live streaming attribute parameter.

3. The method according to claim 1 or 2, further comprising:
acquiring an amount of types of the virtual item that has been configured in the item slots under a plurality of live streaming attributes, from the established mapping relationship between the live streaming attribute, the item slot and the virtual item, in a case that there are the plurality of live streaming attributes;
generating identification information based on the amount of types of the virtual item;
displaying the identification information in the item slot.

4. The method according to claim 3, further comprising:
acquiring and displaying the configured virtual item and the live streaming attribute corresponding to the virtual item, wherein the configured virtual item is acquired in response to a triggering operation on the identification information.

5. The method according to any preceding claim, wherein said acquiring (S230) the virtual item corresponding to the item slot comprises:
acquiring candidate virtual items in response to the virtual item configuration operation on the item slot;
acquiring the virtual item corresponding to the item slot from the candidate virtual items in response to a selection operation on the candidate virtual items.

6. The method according to any preceding claim, further comprising:
determining (S910) a target live streaming attribute of a live streaming room displayed by the audience terminal, in response to a virtual item acquisition request sent by the audience terminal;
determining (S920) a target item slot under the target live streaming attribute and a target virtual item corresponding to the target item slot, based on the mapping relationship between the live streaming attribute, the item slot and the virtual item;
sending (S930) the target virtual item corresponding to the target item slot to the audience terminal, such that the audience terminal displays the target virtual item in the target item slot of the virtual item configuration panel.

7. The method according to claim 6, wherein there are a plurality of the target live streaming attributes, and said determining the target item slot under the target live streaming attribute and the target virtual item corresponding to the target item slot based on the mapping relationship between the live streaming attribute, the item slot and the virtual item comprises:
acquiring the item slot under each of the target live streaming attributes and the virtual item corresponding to the item slot based on the mapping relationship;
determining the target item slot and the target virtual item corresponding to the target item slot based on the item slot under each of the target live streaming attributes and the virtual item corresponding to the item slot.

8. The method according to claim 7, wherein said determining the target item slot and the target virtual item corresponding to the target item slot based on the item slot under each of the target live streaming attributes and the virtual item corresponding to the item slot comprises:
acquiring an attribute priority of each of the target live streaming attributes;
obtaining the target item slot and the target virtual item from item slots of the plurality of target live streaming attributes and virtual items corresponding to the item slots, based on the attribute priority.

9. The method according to any preceding claim, further comprising:
displaying a generated history panel configuration record in response to a history record viewing operation, wherein the history panel configuration record comprises the established mapping relationship between the live streaming attribute, the item slot and the virtual item.

10. A display method for a virtual item, performed by an audience terminal, comprising:
determining (S1210) a target live streaming attribute of a currently displayed live streaming room in response to a virtual item acquisition request;
acquiring (S1220) a target item slot corresponding to the target live streaming attribute and a target virtual item corresponding to the target item slot based on a mapping relationship between a live streaming attribute, an item slot and a virtual item, wherein the mapping relationship is obtained through configuration of a virtual item configuration panel displayed by a server; and
displaying (S1230) the target virtual item in the target item slot of the virtual item configuration panel.

11. The method according to claim 10, wherein there are a plurality of target live streaming attributes, and said acquiring the target item slot corresponding to the target live streaming attribute and the target virtual item corresponding to the target item slot comprises:
acquiring an item slot under each of the target live streaming attributes and the virtual item corresponding to the item slot based on the mapping relationship;
determining the target item slot and the target virtual item corresponding to the target item slot based on the item slot under each of the target live streaming attributes and the virtual item corresponding to the item slot.

12. The method according to claim 11, wherein said determining the target item slot and the target virtual item corresponding to the target item slot based on the item slot under each of the target live streaming attributes and the virtual item corresponding to the item slot comprises:
acquiring an attribute priority of each of the target live streaming attributes, and determining the target item slot and the target virtual item corresponding to the target item slot based on the attribute priority.

13. A display control apparatus for a virtual item, comprising:
a panel display module (1402) configured to display a virtual item configuration panel, wherein a plurality of item slots are displayed in the virtual item configuration panel;
an attribute acquisition module (1404) configured to acquire a live streaming attribute in response to an attribute selection operation;
an item acquisition module (1406) configured to acquire a virtual item corresponding to the item slot in response to a virtual item configuration operation on the item slot; and
a relationship generation module (1408) configured to establish a mapping relationship between the live streaming attribute, the item slot and the virtual item, wherein the mapping relationship is used to instruct an audience terminal to display the virtual item in the item slot of the virtual item configuration panel.

14. The apparatus according to claim 13, further comprising:
a configuration page display module configured to display a live streaming attribute configuration page;
a receiving module configured to receive a target live streaming attribute parameter through the live streaming attribute configuration page, wherein the target live streaming attribute parameter is used to define a content and an attribute of at least one of a live streaming room and an anchor account;
an attribute generation module configured to generate the live streaming attribute based on the target live streaming attribute parameter.

15. A display apparatus for a virtual item, comprising:
a response module (1502) configured to determine a target live streaming attribute of a currently displayed live streaming room;
an acquisition module (1504) configured to acquire a target item slot corresponding to the target live streaming attribute and a target virtual item corresponding to the target item slot, wherein the target item slot and the target virtual item corresponding to the target item slot are determined based on a preconfigured mapping relationship between a live streaming attribute, an item slot and a virtual item, the mapping relationship is obtained through configuration of a virtual item configuration panel displayed by a server; and
a display module (1506) configured to display the target virtual item in the target item slot of a virtual item panel.
